# EUROPÄISCHE PATENTSCHRIFT

(11) **EP 1 115 518 B1**
(45) Veröffentlichungstag und Bekanntmachung des Hinweises auf die Patenterteilung: **19.03.2003**
(21) Anmeldenummer: 99955786.1
(22) Anmeldetag: 24.09.1999
(51) Int. Cl.: B21D 39/03, B21J 15/12

(54) **VERFAHREN UND VORRICHTUNG ZUM VERBINDEN VON SICH ÜBERLAPPENDEN PLATTENFÖRMIGEN BAUTEILEN**
METHOD AND DEVICE FOR CONNECTING OVERLAPPING FLAT PARTS
PROCEDE ET DISPOSITIF POUR ASSEMBLER DES ELEMENTS SOUS FORME DE PLAQUES QUI SE CHEVAUCHENT

(30) Priorität: 25.09.1998 DE 19843874; 24.09.1999 DE 19945743
(43) Veröffentlichungstag der Anmeldung: 18.07.2001
(73) Patentinhaber: Technische Universität Dresden, 01069 Dresden (DE)
(72) Erfinder: VOELKNER, Wolfgang, D-01239 Dresden (DE); EFFENBERG, Gerald, D-01728 Haenichen (DE); MAUERMANN, Reinhard, D-01309 Dresden (DE)
(86) Internationale Anmeldenummer: DE9903064
(87) Internationale Veröffentlichungsnummer: WO00018528

(56) Entgegenhaltungen:
- WO-A-91/15316
- WO-A-96/33031
- US-A- 4 651 140
- PATENT ABSTRACTS OF JAPAN vol. 015, no. 354 (M-1155), 6. September 1991 (1991-09-06) & JP 03 138046 A (BROTHER IND LTD), 12. Juni 1991 (1991-06-12)

## Beschreibung

Die Erfindung betrifft ein Verfahren zum Verbinden von sich überlappenden plattenförmigen Bauteilen nach dem Oberbegriff des Anspruchs 1. Die Erfindung betrifft außerdem eine Vorrichtung zum Verbinden von sich überlappenden plattenförmigen Bauteilen nach dem Oberbegriff des Anspruchs 4.

Aus der DE 40 09 813 C1 ist eine Vorrichtung zum Verbinden von sich überlappenden plattenförmigen Bauteilen bekannt. Mit einer derartigen Vorrichtung lassen sich Bleche durch das sogenannte Clinchen verbinden. Die Besonderheit bei dieser Vorrichtung besteht darin, dass im Bereich des Umfangrandes der Ausnehmung der Matrize ein verformbares Material vorgesehen ist, das weicher als das der zu verbindenden Bleche ist. Damit soll auf eine übliche Teilung der Matrize verzichtet werden.

Aus der DE 39 23 182 C2 ist eine Vorrichtung zum Verbinden von übereinander angeordneten plattenförmigen Bauteilen mit einem Stempel bekannt, bei der eine geteilte Matrize verwendet wird. Zur Lagerung der Matrizenteile ist ein Grundkörper mit komplementären Kegelflächen vorgesehen, sowie eine Rückholfeder zur Vorspannung auf dem Grundkörper in Bewegungsrichtung des Stempels.

Beim Clinchen, unter Verwendung von Vorrichtungen nach DE 40 09 813 C1 oder DE 39 23 182 C2, dringt ein Stempel beim Arbeitshub in einer geradlinigen Bewegung in die zu verbindenden Bleche ein, wobei auf der Gegenseite eine feste oder geteilte Matrize die Form der sogenannten Matrizenseite des Clinchpunktes mit ausbildet. In der geteilten Matrize wird ein Gegenstempel positioniert.
Mit dem Einbringen der Vertiefung durch die Werkzeuge wird neben dem Kraftschluss der bekannte Formschlusseffekt, die sogenannte Hinterschneidung, zwischen den Fügepartnern erzielt, wobei der Vorgang bis zu einer vorgegebenen Bodendicke durchgeführt wird.

Nachteilig ist, dass beim bekannten Clinchen hohe Kräfte benötigt werden. Deshalb sind die Werkzeug- und Werkzeuggestellbelastungen hoch und schränken die Anwendung bei hochfesten Blechen ein.

Durch die hohen Fügekräfte werden bei der Notwendigkeit genauer koaxialer Ausrichtung zwischen Stempel und Matrize große Anforderungen an die Führung der Werkzeuge gestellt.
Für die überwiegend als Werkzeuggestell eingesetzten C-Bügel wird mit hohen Kräften die Ausladung und damit die Anwendbarkeit des Verfahrens eingegrenzt.
Durch die geradlinige Stempelbewegung wird die Dicke des stempelseitigen Bleches im sogenannten Halsbereich stark verjüngt und der Hinterschnitt nur gering ausgebildet, wodurch die Verbindungsfestigkeit begrenzt wird.

Die Überlagerung einer Taumelbewegung zu einer Fügevorschubbewegung ist vom Taumelnieten her bekannt. Das Taumelnieten wird angewandt, um durch partielle Stauch- und Prägeoperationen, z.B. an einem Hilfsfügeteil, eine formschlüssige Verbindung zu erzielen.

Aufgabe der Erfindung ist es, die beim Clinchen aufzubringenden Kräfte zu senken. Damit sollen die Anwendungsgebiete bezüglich hochfester Werkstoffe und die Zugänglichkeit bei großen Bauteilen mit C-Bügeln wesentlich erweitert werden. Die Aufgabe besteht weiterhin darin, die Schwachstellen geringe Halsdicke und geringer Hinterschnitt zu beseitigen und damit bei der gleichen Fügeaufgabe eine höhere Verbindungsfestigkeit zu erreichen. Ferner sollen komplizierte Matrizen und der notwendige Aufwand zum koaxialen Positionieren von Stempel und Matrize nach Möglichkeit entfallen.

Erfindungsgemäss wird die Aufgabe durch ein Verfahren mit den im Anspruch 1 genannten Merkmalen gelöst. Vorteilhafte Varianten des Verfahrens ergeben sich aus den abhängigen Unteransprüchen. Die Aufgabe wird weiterhin durch eine Vorrichtung mit den im Anspruch 4 genannten Merkmalen gelöst. Vorteilhafte Ausgestaltungen ergeben sich aus den in den Ansprüchen 5 bis 9 genannten Merkmalen.

Bei dem Verfahren wird der axialen Vorschubbewegung eine taumelnde Bewegung des Formstempels und eine variable Stempelkraft überlagert, wobei die taumelnde Bewegung und die variable Stempelkraft aufeinander abgestimmt gesteuert werden.
Während der Stempel eine Taumelbewegung ausführt, wird die Stempelkraft so gesteuert, dass während der Wanderung der zwischen Stempelstirn und Werkstück gebildeten Kontaktfläche vom Mittelpunkt des Clinchpunktes nach außen die Stempelkraft erhöht und während der Wanderung dieser Fläche von außen nach innen die Stempelkraft verringert wird.

Durch die Taumelbewegung wird der Werkstoff partiell umgeformt, so dass die Prozesskräfte deutlich sinken. Durch die variable Stempelkraft wird der gewünschte Werkstofffluss radial von innen nach außen realisiert.
Die Taumelbewegung selbst kann während des ganzen Fügeprozesses oder während eines Teiles des Fügeprozesses der axialen Vorschubbewegung überlagert sein.

Vorrichtungsgemäß ist am Formstempel ein mechanisch angetriebener Mechanismus vorgesehen, der diesen in eine Taumelbewegung versetzt. Weiterhin ist ein mechanisch, servohydraulisch, piezoelektrisch o. dgl. angetriebener Mechanismus vorgesehen, der den Formstempel mit einer variablen Stempelkraft gegen die Ausnehmung der Matrize vorschiebt. In Abhängigkeit von der Taumellage wird die Beaufschlagung des Formstempels mit der variablen Stempelkraft ermittelt und gesteuert.

Auf der Gegenseite liegen die Bleche auf einer festen oder beweglichen Matrize mit oder ohne Gegenstempel oder aber nur auf einem glatten Amboss auf.

Eine spezielle Geometrie des Formstempels realisiert im Zusammenhang mit der Taumelbewegung am Beginn des Fügeprozesses den Einzug von mehr Material in die Umformzone. Während der Umformung und vor allem am Ende des Vorganges wird Material radial aus dem Bodenbereich in den Halsbereich gedrückt und damit aus einem Gebiet, in dem eine Anhäufung nicht notwendig ist, in den Halsbereich verlagert, der für die Festigkeit der Verbindung ausschlaggebend ist.

Dazu besitzt der Formstempel eine Stirnform als Radien R1/R2 und/oder als Kegel und/oder als Schleppkurve, wobei bei einer Ausbildung mit reinen Radien der Radius R1 größer ist als der maximale Stempeldurchmesser und R2 kleiner ist als der maximale Stempeldurchmesser.

Der Gegenstempel weist eine Stirnform aus entweder mit einem Radius R3 und/oder einem Kegel und/oder einer Schleppkurve, wobei bei einer Ausbildung mit reinem Radius der Radius R3 größer ist als der maximale Stempeldurchmesser.

Vorteilhaft besitzt der Formstempel eine Stempelhinterschneidung, an welcher der maximale Stempeldurchmesser eine solche Verjüngung erfährt, dass eine Kollision zwischen dem Schaft des Formstempels und dem zylinderförmigen Teil des stempelseitigen Bleches verhindert wird.

Es ist von Vorteil, wenn eine bewegliche Matrize einen Matrizenhinterschnitt besitzt, an welchem der Matrizeninnendurchmesser eine Verjüngung erfährt, um die Hinterschneidung im Fügepunkt zu unterstützen.

Es kann auch eine feste Matrize verwendet werden. Diese sollte dann eine Ausformungsschräge mit einem Winkel und/oder Übergangskurven zwischen Matrizenstirn und -grund besitzen.

Die Erfindung wird nachfolgend an Hand von Ausführungsbeispielen noch näher erläutert. In den Zeichnungen zeigen:
Fig. 1 das bekannte Clinchen mit geteilter Matrize und Gegenstempel
Fig. 2 einen Formstempel in ausgelenkter Lage am Ende des Umformvorganges
Fig. 3 eine Bewegungsbahn der Kontaktfläche zwischen Stempelstim und Werkstoff
Fig. 4 eine Vorrichtung mit fester Matrize und flachem Amboss

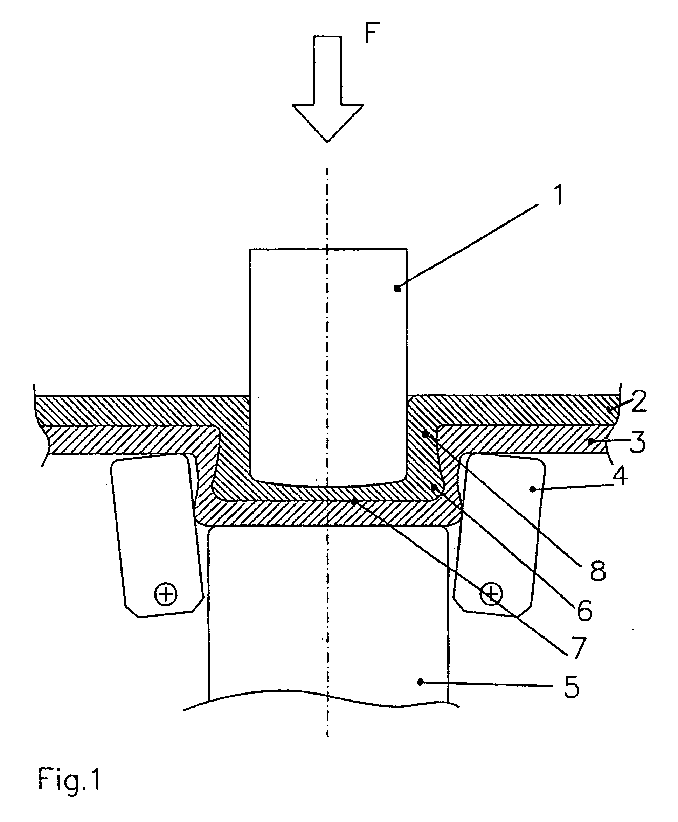

In Fig. 1 ist das bekannte Clinchen mit geteilter Matrize **4** und Gegenstempel **5** dargestellt. Der Stempel **1** dringt in einer axialen Bewegung in die zu verbindenden Bleche **2** und **3** ein.
Mit dem Einbringen der Vertiefung durch die Werkzeuge wird neben dem Kraftschluss der bekannte Formschlusseffekt, die sogenannte Hinterschneidung **6,** zwischen den Fügepartnern erzielt, wobei der Vorgang bis zu einer vorgegebenen Restbodendicke **7** durchgeführt wird und sich ein Halsbereich **8** als entscheidendes Kriterium für die Verbindungsfestigkeit bildet.

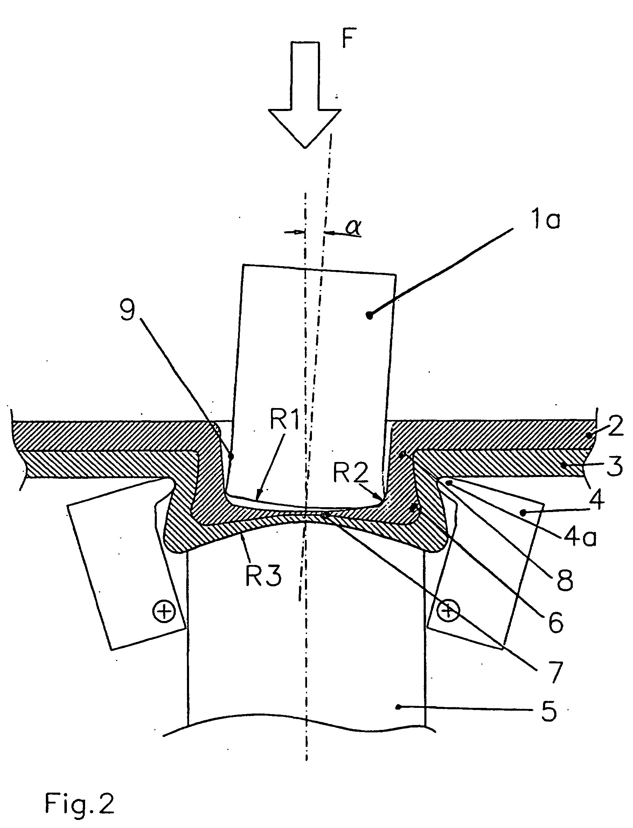

In Fig. 2 ist der Formstempel **1a** in ausgelenkter Lage am Ende des Umformvorganges dargestellt. Die beiden Bleche **2, 3** werden in eine geteilte Matrize **4** gepresst, die mit einem Matrizenhinterschnitt **4a** versehen ist.

Bei der Taumelbewegung kippt der Formstempel **1a** um den Winkel α und gemeinsam mit den Radien R1 / R2 von Formstempel **1a** und Gegenstempel **5** wird die Restbodendicke **7** gezielt verjüngt und das Material aus dem Bodenbereich radial nach außen verdrängt.

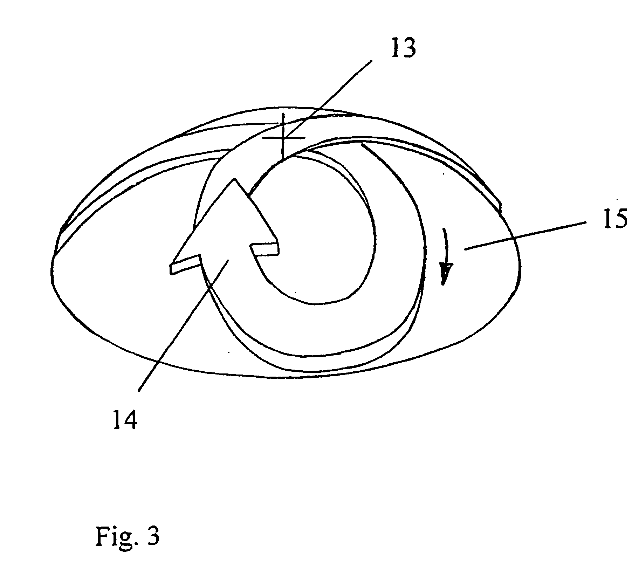

In Fig. 3 ist eine Bahn einer Taumelbewegung dargestellt. Bei der Bewegung des Formstempels in Form einer Rosette wird der Mittelpunkt des Clinchpunktes **13** mehrfach durchlaufen. Bei der nach innen, Richtung Zentrum des Punktes verlaufenden Bewegung **14** wird die Stempelkraft verringert, im Extremfall bis auf Null, bei der nach außen gerichteten Bewegung **15** wird eine hohe Stempelkraft **F** realisiert.
Die Stempelkraft **F** hat also bei steigendem Wert α einen größeren Wert und presst so den Werkstoff radial nach außen. Diese variable Stempelkraft wird mechanisch, servohydraulisch, piezoelektrisch o. dgl. erzeugt.
Der entstehende spezielle Werkstofffluss und der Matrizenhinterschnitt **4a** ermöglichen eine bessere Ausbildung des kritischen Halsbereiches **8** und der Hinterschneidung **6**.

Die Stempelhinterschneidung **9** des Formstempels **1a** ist Voraussetzung für einen horizontal verschiebungsfreien Vorgang und ermöglicht eine zylindrische Innenkontur des Fügepunktes.

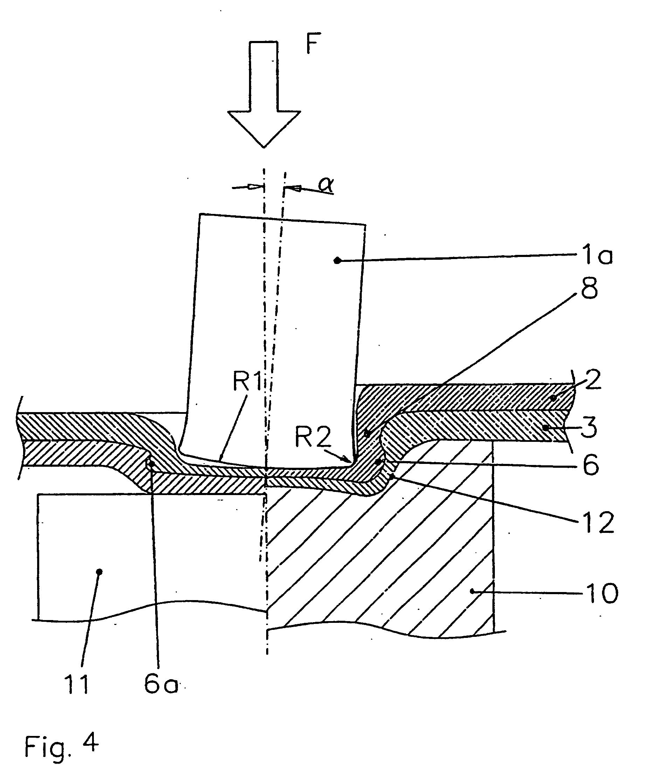

In Fig. 4 wird auf der rechten Seite der Mittellinie die Vorrichtung mit fester Matrize **10** und auf der linken Seite mit flachem Amboss **11** jeweils im unteren Totpunkt gezeigt.
Wiederum wird durch den Werkstofffluss ein gut ausgebildeter Halsbereich **8** und eine Hinterschneidung **6** bei geringer Bodendicke **7** erzielt, wobei die Hinterschneidung **6a** bei flachem Amboss **11** geringer aber für viele Einsatzfälle ausreichend ist.

### Bezugszeichenliste

- 1 -: Stempel
- 1a -: Formstempel
- 2 -: Blech
- 3 -: Blech
- 4 -: Matrize
- 4a -: Matrizenhinterschnitt
- 5 -: Gegenstempel
- 6 -: Hinterschneidung
- 6a -: Hinterschneidung
- 7 -: Restbodendicke
- 8 -: Halsbereich
- 9 -: Stempelhinterschneidung
- 10 -: Matrize
- 11 -: Amboss
- 12 -: Aushebeschräge der Matrize
- 13 -: Mittelpunkt des Clinchpunktes
- 14 -: nach innen, Richtung Zentrum des Punktes verlaufende Bewegung
- 15 -: nach außen gerichtete Bewegung
- F -: variable Stempelkraft
- R1 -: Radius am Stempel
- R2 -: Radius am Stempel
- R3 -: Radius am Gegenstempel

## Patentansprüche

1. Verfahren zum Verbinden von sich überlappenden plattenförmigen Bauteilen in einem mechanischen Fügeprozess, wie beispielsweise Blechen, mit einem Formstempel (1a) und einer mit einer Ausnehmung versehenen Matrize (4), zwischen denen die zu verbindenden Bauteile (2,3) positioniert werden, **dadurch gekennzeichnet, dass** der aktiven axialen Vorschubbewegung des Formstempels (1a) eine Taumelbewegung während des ganzen Fügeprozesses oder während eines Teiles des Fügeprozesses und eine variable von der Taumelbewegung abhängige Stempelkraft (F) aufgeprägt wird, so dass ein zur Hinterschneidung (6) gerichteter Werkstofffluss erzeugt wird.

2. Verfahren nach Anspruch 1, **dadurch gekennzeichnet, dass** die Taumelbewegung des Formstempels (1a) unter einem veränderbaren Winkel (α) durchgeführt wird.

3. Verfahren nach Anspruch 1 oder 2, **dadurch gekennzeichnet, dass** die variable Stempelkraft (F) bei steigendem Winkel (α) einen größeren Wert annimmt und bei abnehmendem Winkel (α) auf einen kleineren Wert reduziert wird.

4. Vorrichtung zum Verbinden von sich überlappenden plattenförmigen Bauteilen in einem mechanischen Fügeprozess, wie beispielsweise Blechen, mit einem verschiebbaren Formstempel (1a) und einer mit einer Ausnehmung versehenen Matrize **(4),** zwischen denen die zu verbindenden Bauteile (2,3) positionierbar sind, **dadurch gekennzeichnet, dass** ein mechanisch angetriebener Mechanismus vorgesehen ist, der den Formstempel (1a) in eine Taumelbewegung versetzt, ein weiterer mechanisch, servohydraulisch, piezoelektrisch o. dgl. angetriebener Mechanismus vorgesehen ist, der den Formstempel (1a) mit einer variablen Stempelkraft (F) gegen die Ausnehmung der Matrize **(4)** vorschiebt, wobei der Wert der Stempelkraft (F) in Abhängigkeit von der Taumellage steuerbar ist.

5. Vorrichtung nach Anspruch 4, **dadurch gekennzeichnet, dass** der Formstempel (1a) eine Stirnform als Radien (R1/R2) und/oder als Kegel und/oder als Schleppkurve besitzt, wobei bei einer Ausbildung mit reinen Radien (R1) größer ist als der maximale Stempeldurchmesser und der Radius **(R2)** kleiner ist als der maximale Stempeldurchmesser.

6. Vorrichtung nach Anspruch 4 oder 5, **dadurch gekennzeichnet, dass** ein Gegenstempel (5) vorgesehen ist, der eine Stirnform als Radius (R3) und/oder als Kegel und/oder als Schleppkurve besitzt, wobei bei einer Ausbildung mit reinem Radius (R3) dieser größer ist als der maximale Stempeldurchmesser.

7. Vorrichtung nach einem der Ansprüche 4 bis 6, **dadurch gekennzeichnet, dass** der Formstempel (1a) eine Stempelhinterschneidung (9) besitzt, an welcher der maximale Stempeldurchmesser eine solche Verjüngung erfährt, dass eine Kollision zwischen dem Schaft des Formstempels (1a) und dem zylinderförmigen Teil des stempelseitigen Bleches verhindert wird.

8. Vorrichtung nach einem der Ansprüche 4 bis 7, **dadurch gekennzeichnet, dass** eine bewegliche Matrize (4) vorgesehen ist, die einen Matrizenhinterschnitt (4a) besitzt, an welchem der Matrizeninnendurchmesser eine Verjüngung erfährt, um die Hinterschneidung im Fügepunkt zu unterstützen.

9. Vorrichtung nach einem der Ansprüche 4 bis 8, **dadurch gekennzeichnet, dass** eine feste Matrize (10) vorgesehen ist, die eine Ausformungsschräge (12) mit einem Winkel und/oder Übergangskurven zwischen Matrizenstirn und -grund besitzt.

## Claims

1. Method for connecting overlapping flat parts in a mechanical joining process, e.g. of sheets, using a forming punch (1a) and a die (4) provided with a recess between which the parts to be joined (2, 3) are positioned **characterized in that** the active axial feeding movement of the forming punch (1a) is superimposed with an orbital motion during the whole joining process or during a portion of the joining process and a varying punch force (F) dependent on the orbital motion so that a material flow directed to the undercut (6) is produced.

2. Method to Claim 1 **characterized in that** the orbital motion of the forming punch (1a) is performed under a variable angle (α).

3. Method to Claim 1 or 2 **characterized in that** the varying punch force (F) increases with an increasing angle (α) and decreases with a decreasing angle (α).

4. Device for connecting overlapping flat parts in a mechanical joining process, e.g. of sheets, using a displaceable forming punch (1a) and a die (4) provided with a recess between which the parts to be joined (2, 3) can be positioned **characterized in that** a mechanically powered mechanism is provided which gives the forming punch (1a) an orbital motion, another mechanism powered mechanically, servohydraulically, piezoelectrically or otherwise, is provided which feeds the forming punch (1a) with a variable punch force (F) against the recess of the die (4), whereby the value of the punch force (F) can be controlled depending on the orbital position.

5. Device to Claim 4 **characterized in that** the forming punch (1a) has a front end formed as radii (R1/R2) and/or a taper and/or a tractrix curve, whereby if shaped with radii only the radius (R1) is bigger than the maximum punch diameter and the radius (R2) is smaller than the maximum punch diameter.

6. Device to Claim 4 or 5 **characterized in that** a counterpunch (5) is provided which has a front end formed as a radius (R3) and/or a taper and/or a tractrix curve, whereby if shaped with a radius (R3) only, said radius is bigger than the maximum punch diameter.

7. Device to any of the Claims 4 to 6 **characterized in that** the forming punch (1a) has a punch undercut (9) where the maximum punch diameter is tapered such that a collision between the shank of the forming punch (1a) and the cylindrical portion of the punch-side sheet is prevented.

8. Device to any of the Claims 4 to 7 **characterized in that** a movable die (4) is provided having a die undercut (4a) at which the die interior diameter is tapered to support the undercut at the joining spot.

9. Device to any of the Claims 4 to 8 **characterized in that** a fixed die (10) is provided having a draft (12) with an angle and/or transition curves between the die head and die bottom.

## Revendications

1. Procédé pour réaliser un assemblage mécanique d'éléments en plaques qui se chevauchent, tels que par exemple de tôles, à l'aide d'un mandrin (1a) et d'une matrice (4) munie d'un creux, entre lesquels les éléments à assembler (2,3) sont mis en position, **caractérisé par le fait que**, pendant tout le procès d'assemblage ou pendant une partie du procès d'assemblage, l'avancement axial actif du mandrin (1a) est lié à une nutation ainsi qu'à une force variable exercée par le mandrin (F) qui dépend de la nutation, afin d'atteindre un avancement du métal dirigé vers la contre-dépouille (6).

2. Procédé conforme à la revendication n°. 1, **caractérisé par le fait que** la nutation du mandrin (1a) se fait à angle variable (α).

3. Procédé conforme aux revendications n°. 1 ou 2, **caractérisé par le fait que** la valeur de la force variable exercée par le mandrin (F) augmente avec un angle croissant (α), ainsi qu'elle est réduite sur une plus petite valeur quand l'angle diminue.

4. Dispositif pour réaliser un assemblage mécanique d'éléments en plaques qui se chevauchent, tels que par exemple de tôles, à l'aide d'un mandrin déplaçable (1a) et d'une matrice (4) munie d'un creux, entre lesquels les éléments à assembler (2,3) peuvent être mis en position, **caractérisé par le fait qu'on** a prévu d'installer un mécanisme mécanisé pour mettre le mandrin (1a) en nutation, et qu'un autre mécanisme mécanique, servo-hydraulique, piécoélectrique etc. y est prévu pour avancer le mandrin (1a) contre le creux de la matrice (4 ) avec une force variable du mandrin (F), la valeur de la force exercée par le mandrin (F) étant réglable en fonction de la position du mouvement chancelant.

5. Dispositif conforme à la revendication n°. 4, **caractérisé par le fait que** le mandrin (1a) a une forme frontale en rayons (R1/R2) et/ou conique et/ou en forme de tractoire ; quand il s'agit d'une réalisation où il n'y a que des rayons, (R1) est supérieur au diamètre maximal du mandrin, tandis que le rayon (R2) est inférieur au diamètre maximal du mandrin.

6. Dispositif conforme à l'une des revendications n°. 4 ou 5, **caractérisé par le fait qu'**il est prévu d'installer un contre-mandrin (5), dont la forme frontale est celle d'un rayon (R3) et/ou conique et/ou en forme de tractoire ; quand il s'agit d'une réalisation uniquement avec le rayon (R3), celui-ci est supérieur au diamètre maximal du mandrin.

7. Dispositif conforme à l'une des revendications n°. 4 à 6, **caractérisé par le fait que** le mandrin (1a) est muni d'une contre-dépouille (9), où le diamètre maximal du mandrin est diminué de manière à éviter la collision entre la tige du mandrin (1a) et la partie cylindrique de la tôle disposée côté mandrin.

8. Dispositif conforme à l'une des revendications n°. 4 à 7, **caractérisé par le fait qu**'il est prévu d'installer une matrice mobile (4) disposant d'une contre-dépouille (4), sur lequel le diamètre intérieur de la matrice est diminué afin de supporter la contre-dépouille sur le point d'assemblage.

9. Dispositif conforme à l'une des revendications n°. 4 à 8, **caractérisé par le fait qu'**il est prévu d'installer une matrice fixe (10) disposant d'un chanfrein (12) avec un angle et/ou des courbes de transition entre le front et le fond de la matrice.
